# EUROPÄISCHE PATENTSCHRIFT

(11) **EP 0 513 572 B1**
(45) Veröffentlichungstag und Bekanntmachung des Hinweises auf die Patenterteilung: **20.12.1995**
(21) Anmeldenummer: 92106980.3
(22) Anmeldetag: 24.04.1992
(51) Int. Cl.: B29C 45/67

(54) **Schliesseinheit für Spritzgiessmaschinen**
Closure unit for injection moulding machines
Unité de fermeture pour machines de moulage par injection

(30) Priorität: 14.05.1991 DE 4115592
(43) Veröffentlichungstag der Anmeldung: 19.11.1992
(73) Patentinhaber: Battenfeld GmbH, D-58540 Meinerzhagen (DE)
(72) Erfinder: Kassner, Ralf, W-5882 Meinerzhagen (DE); Kandula, Stanislaus, W-5810 Witten (DE); Holzschuh, Johann, Dipl.-Ing., W-5882 Meinerzhagen (DE)
(74) Vertreter: Müller, Gerd, Dipl.-Ing.

(56) Entgegenhaltungen:
- AT-B- 342 228
- DE-A- 2 008 748
- DE-A- 3 916 193

## Beschreibung

Die Erfindung betrifft eine Schließeinheit für Spritzgießmaschinen
- mit zwei Endplatten und mehreren, z.B. vier, diese auf Abstand miteinander verbindenden Führungsholmen,
- mit einer zu den Endplatten parallelen und längs der Führungsholme verschiebbaren Zwischenplatte,
- mit Fahrzylindern, die an einer Endplatte ihr Widerlager haben und über ihre Kolbenstangen an der Zwischenplatte angreifen sowie diese Zwischenplatte zur Abstandsänderung gegenüber der anderen Endplatte entlang der Führungsholme in Schließ- und Öffnungsrichtung verlagern,
- wobei die Zwischenplatte und die andere Endplatte jeweils eine Aufspannplatte für die beiden Formhälften eines Formwerkzeugs bilden,
- wobei das mittels der beiden Aufspannplatten in seine Schließstellung gebrachte Formwerkzeug über ein zwischen die eine Endplatte und die Zwischenplatte einschaltbares, an einem Zentralstempel angreifendes Druckkissen unter eine erhöhte Schließkraft setzbar ist,
- wobei vorzugsweise der Zentralstempel in seiner Länge auf unterschiedliche Abstände zwischen der das Formwerkzeug in seiner Schließstellung haltenden Zwischenplatte bzw. beweglichen Formaufspannplatte und der einen Endplatte bzw. ortsfesten Formaufspannplatte einstellbar ist,
- wobei der Zentralstempel ausschließlich bei Schließstellung des Formwerkzeuges mit dem Druckkissen wahlweise kuppelbar und entkuppelbar ist,
- wobei als Kupplung zwischen dem Zentralstempel und dem Druckkissen zwei Vielkeil- oder Sternprofilkörper vorgesehen und in einer Normalrichtung zur Öffnungs- und Schließrichtung des Formwerkzeugs gegeneinander begrenzt winkelverdrehbar angeordnet sind,
- wobei der Vielkeil- oder Sternprofilkörper am freien Ende des Zentralstempels ein dessen Umfang mit seiner Profilierung überragendes Kopfstück ist, während das Druckkissen als Vielkeil- bzw. Sternprofilkörper einen Ringkolben mit einer komplementären Innenprofilierung aufweist,
- wobei das Kopfstück des Zentralstempels durch einen Antrieb zumindest begrenzt drehwinkelverstellbar vorgesehen ist,
- und wobei der Antrieb des Kopfstücks einerseits in der entkuppelten Deckungslage und andererseits in der gekuppelten Versetztlage der beiden Vielkeil- bzw. Sternprofilkörper begrenzbar ist.

Eine Schließeinheit dieser Gattung ist bereits bekannt durch DE 39 16 193 A1.

Diese bekannte Schließeinheit ist gegenüber anderen, ebenfalls vorbekannten Schließeinheiten insofern vorteilhaft, daß sie ohne schnell bewegte Schwungmassen auskommt und darüber hinaus auch noch mit einem verminderten baulichen Aufwand erstellt werden kann.

Eine Unzulänglichkeit dieser gattungsgemäßen Schließeinheit besteht jedoch noch darin, daß die Drehwinkelverstellung des als Vielkeil- oder Sternprofilkörper am Zentralstempel vorgesehenen Kopfstücks manuell, bspw. mit Hilfe einer Handhabe, vorgenommen wird. Insbesondere bei im praktischen Einsatz eintretender Schwergängigkeit der Verstellmittel kann es dabei leicht vorkommen, daß die Ein- und Ausrückstellung der Kupplung nicht ordnungsgemäß eingestellt wird und dann bei Beaufschlagung des Druckkissens Beschädigungen an den Kupplungselementen hervorgebracht werden können.

Die Erfindung zielt deshalb darauf ab, eine Schließeinheit der eingangs näher spezifizierten Ausführung in der Weise zu verbessern, daß sich die Ein- und Ausrückstellung der Kupplung zwischen dem Zentralstempel und dem Druckkissen jederzeit sicher einstellen lassen.

Die Lösung dieser Aufgabe wird erfindungsgemäß einerseits dadurch erreicht,
- daß der Antrieb des Kopfstücks mit einem Stellmotor, insbesondere einem pneumatischen, hydraulischen oder elektrischen Servomotor ausgestattet ist,
- und daß am Ringkolben des Druckkissens vor der Innenprofilierung zwei Gruppen von Initiatoren für den Antrieb des Kopfstücks sitzen, von denen die eine Gruppe der entkuppelten Deckungslage und die andere Gruppe der gekuppelten Versetztlage der beiden Vielkeil- bzw. Sternprofilkörper zugeordnet ist.

Andererseits läßt sich diese Aufgabe erfindungsgemäß aber auch dadurch lösen,
- daß der Antrieb des Kopfstücks mit einem Stellmotor, insbesondere einem Servomotor, ausgestattet ist, der aus einem Schrittmotor mit Drehwegerfassung besteht,
- wobei eine Drehwegbegrenzung der entkuppelten Deckungslage und die andere Drehwegbegrenzung der gekuppelten Versetztlage der beiden Vielkeil- bzw. Sternprofilkörper zugeordnet ist. Ein solcher Schrittmotor mit Drehwegerfassung bzw. Drehwegbegrenzung kommt dabei ohne die Benutzung von Initiatoren am Ringkolben des Druckkissens aus, wie sie nach dem erstgenannten Lösungsvorschlag vorhanden sind.

Eine erfindungsgemäße Schließeinheit arbeitet für das Aufbringen und Abbauen der erhöhten Schließkraft am Formwerkzeug nur mit kleinen bewegten Massen und kommt dabei zugleich auch mit sehr kurzen Stellwegen aus. Das hat nicht nur verkürzte Zykluszeiten der Schließeinheit bei jedem Spritzvorgang zur Folge, sondern führt zugleich auch zu einer erhöhten Funktionssicherheit bei reduziertem baulichen Aufwand.

Der automatisierte Betrieb einer Schließeinheit auch bei einem Formwerkzeug-Wechsel wird erfindungsgemäß dann begünstigt, wenn der Zentralstempel als ein in sich längenverstellbares Schraubspindelsystem mit einer Gewindehülse, einem dazu koaxialen Gewindeschaft und einem Stellmotor ausgeführt ist, wobei der Gewindeschaft mit dem - den einen Vielkeil- bzw. Sternprofilkörper bildenden - Kopfstück durch den Stellmotor in der Gewindehülse schraubenverdrehbar und damit relativ zum Ringkolben des Druckkissens - dem zweiten Vielkeil- bzw. Sternprofilkörper - axial verlagerbar ist, und wobei dieser Axialverlagerung im Bereich des Ringkolbens - entweder über die Initiatoren oder über den Schrittmotor - verlangsambar und zusätzlich auch winkelbegrenzbar ist.

Mit dieser Merkmalsausstattung ist bei einem Formwerkzeug-Wechsel eine automatisierte Anpassung an unterschiedliche Einbauhöhen des jeweiligen Formwerkzeugs folgendermaßen möglich:
- Die von der Zwischenplatte gebildete Aufspannplatte wird über die Fahrzylindervorgeschoben, bis das Formwerkzeug geschlossen ist und dann eine Endlagenabfrage erfolgt;
- das Schraubspindelsystem wird durch den Stellmotor betätigt, um seine Wirklänge zu verändern;
- dabei findet die Betätigung des Schraubspindelsystems so lange statt, bis sein Kopfstück auf einen bestimmten Initiator trifft;
- durch den Initiator wird der Stellmotor abgebremst, das Schraubspindelsystem aber langsam weiter verstellt, bis das Kopfstück einen weiteren Initiator betätigt, der den Stellmotor stillsetzt;
- im Stillstand befinden sich die als Kupplung zwischen dem Zentralstempel und dem Druckkissen fungierenden beiden Vielkeil- oder Sternprofilkörper in ihrer entkuppelten Dreh-Einstellage unmittelbar voreinander;
- das Einstellen der Einbauhöhe für das jeweilige Formwerkzeug ist abgeschlossen;
- das Formwerkzeug kann jedoch durch Zurückfahren der Zwischenplatte mittels der Fahrzylinder geöffnet werden, weil die Kupplung ihre unwirksame Stellung einnimmt.

Nachfolgend kann jeder Arbeitszyklus der Schließeinheit für einen Spritzvorgang folgendermaßen stattfinden:
- Die Zwischenplatte wird über die Fahrzylinder vorgeschoben, bis das Formwerkzeug geschlossen ist und eine Endlagenabfrage stattfindet;
- der Stellmotor bewirkt eine Winkelverdrehung des Gewindeschaftes der Gewindehülse und damit des Kopfstücks, bis eine zweite Gruppe von Initiatoren betätigt ist und damit die Zähne der beiden als Kupplung zusammenwirkenden Vielkeil- bzw. Sternprofilkörper voreinander liegen, die Kupplung also eingerückt ist;
- das Druckkissen wird betätigt und baut am Formwerkzeug den Schließdruck, bspw. 175 bar, auf;
- nach Ablauf des Spritzvorgangs wird der Druck im Druckkissen abgebaut und dessen Ringkolben in die Grundstellung gebracht, der Initiatoren zugeordnet sind;
- diese Initiatoren lösen den Stellmotor in Rückstellrichtung aus und drehen das Kopfstück des Spindelsystems in die Entkupplungsstellung zurück, welche durch zugehörige Initiatoren bestimmt ist;
- die Fahrzylinder ziehen die Zwischenplatte zurück und öffnen damit das Formwerkzeug zur Spritzlingentnahme, während das Kopfstück der Kupplung und die Zentralspindel durch die Innenprofilierung am Ringkolben des Druckkissens frei hindurchtauchen;
- nach Ablauf einer Pausenzeit beginnt dann ein neuer Arbeitszyklus.

In weiterer Ausgestaltung der erfindungsgemäßen Schließeinheit hat es sich bewährt, wenn der die Innenprofilierung aufweisende Vielkeil- bzw. Sternprofilkörper am Ringkolben des Druckkissens von einem stirnseitig an diesem lösbar befestigten Ringkörper gebildet ist, welcher aus der Stirnwand des Druckkissen-Zylinders herausragt und an dieser drehfest geführt ist, und wenn der Ringkörper stirnseitig die Initiatoren trägt.

In diesem Falle kann über die zwischen dem Zentralstempel und dem Druckkissen befindliche Kupplung ausschließlich die über das Druckkissen erzeugte Schließkraft auf das Formwerkzeug zur Einwirkung gebracht werden, während das Öffnen des Formwerkzeuges allein mit Hilfe der Fahrzylinder möglich ist.

Ist es jedoch erwünscht, die Fahrzylinder zumindest zu Beginn eines jeden Öffnungsvorgangs für das Formwerkzeug zu unterstützen, dann sieht die Erfindung vor, daß am Ringkolben des Druckkissens stirnseitig zwei Ringkörper als Vielkeil- bzw. Sternprofilkörper hintereinandergeschaltet sind, die einerseits eine übereinstimmende Innenprofilierung haben und zwischen denen andererseits über einen die Dicke des Kopfstücks geringfügig überschreitenden Längenbereich die Innenprofilierung freigeschnitten bzw. hinterschnitten ist.

Mit Hilfe der Fahrzylinder wird hier das Kopfstück in den freigeschnittenen bzw. hinterschnittenen Längenbereich der beiden Ringkörper gestellt und kann dann dort zwischen der Einrückstellung und der Ausrückstellung jeweils bedarfsgemäß winkelverdreht werden. Bei Einrückstellung der Kupplung läßt sich über eine solche Kupplung nicht nur der notwendige Schließdruck am Formwerkzeug aufbringen, sondern auch eine zusätzliche Losreißkraft beim Öffnen des Formwerkzeuges über das Druckkissen herbeiführen.

Die Erfindung sieht auch noch vor, daß der Stellmotor ein Hydromotor ist, welcher in der Zwischenplatte und der Gewindehülse des Schraubspindelsystems sitzt sowie mit einem Drehmitnehmer, z.B. einem Vierkantdorn, koaxial und verschiebbar in den Gewindeschaft des Schraubspindelsystems eingreift.

Das Druckkissen mit dem im Druckkissenzylinder befindlichen Ringkolben kann einfach wirkend ausgelegt werden, wenn am Druckkissenzylinder mehrere, z.B. drei, kleinvolumige Rückstoßzylinder für den Ringkolben sitzen, damit dieser nach dem Abbau des Schließdruckes in seine Grundstellung zurückgeführt werden kann. Andererseits besteht jedoch auch die Möglichkeit, das Druckkissen mit dem im Druckkissenzylinder befindlichen Ringkolben doppelt wirkend auszuführen, so daß sowohl der Schließdruckaufbau als auch der Schließdruckabbau unmittelbar über den Ringkolben stattfinden kann.

Damit in der Schließeinheit, nämlich zwischen der die ortsfeste Formaufspannplatte bildenden Endplatte und der die verschiebbare Formaufspannplatte bildenden Zwischenplatte, ohne Behinderung durch das Schließkraft-Aufbausystem eine schnelle Anpassung an unterschiedliche Formwerkzeug-Einbauhöhen möglich ist, wird schließlich noch vorgesehen, daß die eine Endplatte koaxial zum Ringkolben des Druckkissens einen Durchlaß aufweist, durch den das mit der Zwischenplatte verbundene Schraubspindelsystem bei der Öffnungsbewegung des Formwerkzeugs - praktisch über seine jeweils eingestellte, gesamte Wirklänge - rückstellbewegbar ist, nachdem die Kupplung zwischen dem Schraubspindelsystem und dem Druckkissen in ihre Ausrückstellung gebracht wurde.

Nach der Erfindung kann auch den dem Schraubspindelsystem und/oder dem Stellmotor zugeordnetes Festanschlagsystem benutzt werden, das eine erste Drehbegrenzung für mindestens eine entkuppelte Deckungslage und eine zweite Drehwegbegrenzung für mindestens eine gekuppelte Versetztlage der beiden Vielkeil- bzw. Sternprofilkörper umfaßt und außerdem für die jeweilige gekuppelte Versetztlage eine zusätzliche Verriegelung aufweist. Hierdurch lassen sich nicht nur die definierten Endlagen im verriegelten und entriegelten Zustand der Vielkeil- bzw. Sternprofilkörper sichern, sondern es wird auch gewährleistet, daß im druck- und spannungslosen Zustand der Spritzgießmaschine eine unveränderbare Lage der Vielkeil- bzw. Sternprofilkörper relativ zueinander erhalten bleibt.

Das Festanschlagsystem umfaßt dabei vorzugsweise eine der Armzahl der Vielkeil- bzw. Sternprofilkörper entsprechende Anzahl von Drehbegrenzungselementen und Verriegelungselementen, so daß in jedem Falle ein einwandfreies Zusammenwirken der die Kupplung bildenden Vielkeil- bzw. Sternprofilkörper gewährleistet ist.

Mit dem Festanschlagsystem steht ein Stellstück in Wirkverbindung, das aus einer Freigabestellung wahlweise in eine Drehwegbegrenzungsstellung und in eine Riegelstellung bewegbar ist, wobei die Riegelstellung des Stellstücks ausschließlich in der gekuppelten Versetztlage der beiden Vielkeil- bzw. Sternprofilkörper einrückbar ist.

In der Zeichnung sind Ausführungsbeispiele eines Gegenstandes der Erfindung dargestellt. Es zeigen
- Figur 1: eine teilweise geschnittene Längsseitenansicht einer Schließeinheit für Spritzgießmaschinen in einer ersten Ausführungsform,
- Figur 2: im Schnitt entlang der Linie II-II den Bereich der Kupplung, die zwischen einem der Schließdruckerzeugung dienenden Druckkissen und der verschiebbaren Formaufspannplatte vorgesehen ist, und zwar in der Ausrückstellung der Kupplungselemente,
- Figur 3: eine der Fig. 2 entsprechende Darstellung, jedoch in der Einrückstellung der Kupplungselemente,
- Figur 4: in einer Fig. 1 entsprechenden Darstellung eine Schließeinheit für Spritzgießmaschinen bei etwas abgewandelter Ausgestaltung der Kupplung zwischen dem der Schließdruckerzeugung dienenden Druckkissen und der verschiebbaren Formaufspannplatte,
- Figur 5: einen Schnitt entlang der Linie V-V in Fig. 4 durch den Bereich der Kupplung in deren Ausrückstellung,
- Figur 6: die der Fig. 5 entsprechende Darstellung der Kupplung, jedoch in ihrer Einrückstellung,
- Figur 7: im Längsschnitt den Stellmotor für den Antrieb des Schraubspindelsystems enthaltenden Bereich einer weiteren, abgewandelten Bauform einer Schließeinheit,
- Figur 8: einen Schnitt entlang der Linie VIII-VIII in Fig. 7,
- Figur 9: im Längsschnitt die zur Schließeinheit nach Fig. 7 gehörenden Kupplungselemente in ihrer Einrückstellung, und
- Figur 10: eine Ansicht der Kupplungselemente nach Fig. 9 in Pfeilrichtung X.

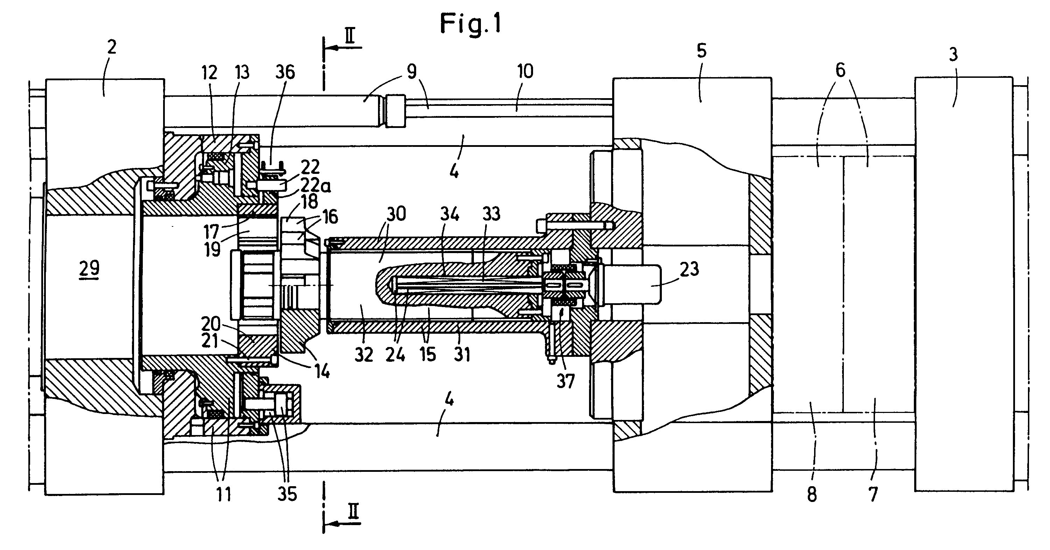

Die Zeichnung zeigt in Fig. 1 eine Schließeinheit 1 für Spritzgießmaschinen, die zwei Endplatten 2 und 3 sowie mehrere, bspw. vier, diese auf Abstand miteinander verbindende Führungsholme 4 aufweist. Parallel zu den Endplatten 2 und 3 ausgerichtet weist die Schließeinheit 1 aber auch noch eine Zwischenplatte 5 auf, die sich längs der Führungsholme 4 verschieben läßt.

Die Endplatte 3 bildet eine ortsfeste Aufspannplatte und die Zwischenplatte 5 eine bewegliche Aufspannplatte für ein Formwerkzeug 6, das in Fig. 1 der Zeichnung nur strichpunktiert angedeutet ist und mindestens aus den beiden Formhälften 7 und 8 besteht. Die Formhälfte 7 des Formwerkzeuges 6 wird dabei mit der die ortsfeste Aufspannplatte bildenden Endplatte 3 der Schließeinheit 1 verbunden und die Formhälfte 8 des Formwerkzeuges 6 wird an der die bewegliche Aufspannplatte bildenden Zwischenplatte 5 der Schließeinheit 1 befestigt.

Fahrzylinder 9 haben an der Endplatte 2 ihr Widerlager und greifen über ihre Kolbenstangen 10 an der Zwischenplatte 5 an. Sie dienen dabei der Verstellung der als bewegliche Aufspannplatte dienenden Zwischenplatte 5 relativ zu der die ortsfeste Aufspannplatte bildenden Endplatte 3, damit das zwischen ihnen eingebaute Formwerkzeug 6 wahlweise geöffnet und geschlossen werden kann.

Damit sich an dem in seine Schließstellung gebrachten Formwerkzeug 6 für jeden Spritzvorgang die beiden Formhälften 7 und 8 mit genügend großem Schließdruck, bspw. 175 bar, in ihrer Trennebene gegeneinander pressen lassen, ohne daß hierdurch die Fahrzylinder 9 beansprucht werden, sind an der Schließeinheit 1 besondere Zusatzvorkehrungen getroffen. Zwischen die Endplatte 2 und die als bewegliche Aufspannplatte fungierende Zwischenplatte 5 ist ein sogenanntes Druckkissen 11 einschaltbar, das aus einem an der Innenseite der Endplatte 2 montierten Druckkissenzylinder 12 und einem darin beweglichen Ringkolben 13 besteht.

Die Wirkverbindung des Druckkissens 11 mit der Zwischenplatte 5 der Schließeinheit 1 wird nur zeitweilig, und zwar lediglich für die Durchführung eines Spritzvorgangs in dem in seiner Schließlage befindlichen Formwerkzeug herbeigeführt, und zwar über eine Kupplung 14, die zwischen dem Ringkolben 13 des Druckkissens 11 und einem von der Rückseite der Zwischenplatte 5 abstehenden Zentralstempel 15 angeordnet ist.

Die Kupplung 14 wird dabei von zwei Vielkeil- oder Sternprofilkörpern 16 und 17 gebildet, die quer zur Öffnungs- und Schließrichtung des Formwerkzeugs 6 liegende Einbauebenen haben. Der eine Vielkeil- oder Sternprofilkörper 16 ist dabei am freien Ende des Zentralstempels 15 vorgesehen und als ein dessen Umfang mit seiner Vielkeil- bzw. Sternprofilierung 18 radial überragendes Kopfstück ausgeführt.

Als Vielkeil- bzw. Sternprofilkörper 17 am Ringkolben 13 des Druckkissens 11 dient eine zur Vielkeil- bzw. Sternprofilierung 18 des Kopfstücks komplementäre Innenprofilierung 19, die in einem Ringkörper 20 ausgebildet ist. Dabei ist der Ringkörper 20 stirnseitig am Ringkolben 13 des Druckkissens 11 angeordnet, vorzugsweise über Schrauben 21 lösbar befestigt. Dabei ragt der Ringkörper 20 aus der Stirnwand des Druckkissenzylinders 12 heraus und ist an dieser über miteinander in verschiebbarem Eingriff stehende Bolzen 22 und Lageraugen 22a drehfest verschiebbar geführt.

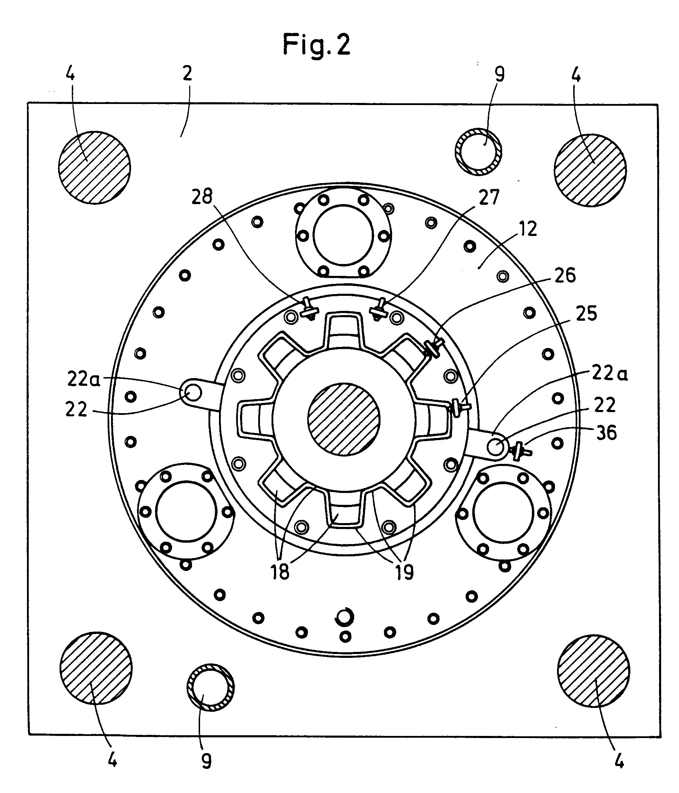

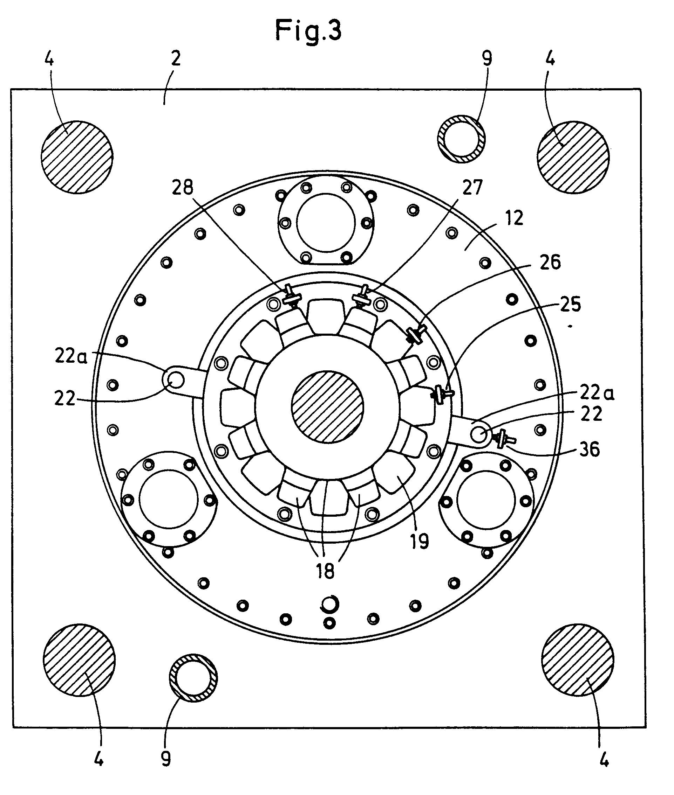

Andererseits ist das den Vielkeil- bzw. Sternprofilkörper 16 bildende Kopfstück mit seiner Vielkeil- bzw. Sternprofilierung 18 am Zentralstempel 15 der Zwischenplatte 5 über einen besonderen von einem Stellmotor 23 betätigten Antrieb 24 zumindest begrenzt winkelverdrehbar relativ zum Vielkeil- bzw. Sternprofilkörper 17 vorgesehen, und zwar zwischen der aus Fig. 2 ersichtlichen Ausrückstellung und der aus Fig. 3 ersichtlichen Einrückstellung der Kupplung 14. Dabei ist in Fig. 2 der Zeichnung zu sehen, daß bei Ausrückstellung die Vielkeil- bzw. Sternprofilierung 18 des Vielkeil- bzw. Sternprofilkörpers 16 mit der Innenprofilierung 19 des Vielkeil- bzw. Sternprofilkörpers 17 Deckungslage hat, sich also die Verzahnungen des jeweils einen Kupplungsteils im Bereich der Zahnlücken des jeweils anderen Kupplungsteils befinden. Demgegenüber ist in Fig. 3 zu sehen, daß in Einrückstellung jeweils die Verzahnung und die Zahnlücken des einen Kupplungsteils den Bereich der Verzahnungen und der Zahnlücken des anderen Kupplungsteils überdecken.

Bevorzugt wird als Stellmotor 23 für den Antrieb 24 ein Hydromotor eingesetzt, der sich über Initiatoren bzw. Auslöser 25, 26, 27, 28 beeinflussen läßt, welche der Kupplung 14 in bestimmter Weise zugeordnet sind, wie das die Fig. 2 und 3 der Zeichnung erkennen lassen.

Diese Initiatoren 25 bis 28 sind paarweise 25/26 und 27/28 einander zugeordnet, und zwar so, daß das eine Paar 25/26 die Ausrückstellung (Fig. 2) und das andere Paar 27/28 die Einrückstellung (Fig. 3) der Kupplung 14 definiert bzw. abfragt. Sind gleichzeitig die Initiatoren 25 und 26 beeinflußt, dann kann der Stellmotor 23 den Antrieb 24 nur veranlassen, den Vielkeil- bzw. Sternprofilkörper 16 aus seiner Ausrückstellung nach Fig. 2 in die Einrückstellung nach Fig. 3 zu verdrehen. Sind hingegen die Initiatoren 27 und 28 gleichzeitig beeinflußt, dann hat der Stellmotor 23 nur die Möglichkeit, den Antrieb 24 so zu verstellen, daß sich der Vielkeil- bzw. Sternprofilkörper 16 aus seiner Einrückstellung nach Fig. 3 in Richtung der Ausrückstellung nach Fig. 2 winkelverdreht.

Während sich in der Ausrückstellung der Kupplung 14 nach Fig. 2 der Zeichnung die Zwischenplatte 5 der Schließeinheit 1 mit Hilfe der Fahrzylinder 9 zwischen der dort gezeigten Schließlage für das Formwerkzeug 6 und dessen Öffnungslage unbehindert auf den Führungsholmen 4 verschieben läßt, weil ihr Zentralstempel 15 ohne weiteres in den Ringkolben 13 des Druckkissens 11 und einem hierzu koaxialen Durchlaß 29 in der Endplatte 2 eintauchen kann, wird diese Möglichkeit blockiert, wenn die Kupplung 14 die Einrückstellung gemäß Fig. 3 einnimmt.

Ausschließlich in der Einrückstellung der Kupplung 14 nach Fig. 3 kann jedoch das Druckkissen 11 über den im Druckkissenzylinder 12 beaufschlagbaren Ringkolben 13 eine Schließkraft aufbauen, welche über den Zentralstempel 15 und die Zwischenplatte 5 auf das in seiner Schließlage befindliche Formwerkzeug 6 einwirkt.

Der Wechsel der Kupplung 14 zwischen ihrer Ausrückstellung nach Fig. 2 und ihrer Einrückstellung nach Fig. 3 kann schnell und problemlos stattfinden, weil nur die geringe Masse des den Vielkeil- bzw. sternprofilkörper 16 bildenden Kopfstücks über einen geringen Stellwinkel hinweg bewegt werden muß. Ein funktionssicheres Arbeiten der gesamten Schließeinheit 1 unter Verkürzung der Zykluszeit ist dadurch möglich.

Der bisher beschriebene Aufbau einer Schließeinheit 1 ist überall dort ohne weiteres einsatzfähig, wo mit Formwerkzeugen 6 gearbeitet wird, die bei im Schließzustand aneinanderliegenden Formhälften 7 und 8 immer eine bestimmte Einbauhöhe aufweisen.

Soll jedoch die Schließeinheit 1 eine Zusammenarbeit mit Formwerkzeugen 6 ermöglichen, die bei im Schließzustand aneinanderliegenden Formhälften 7 und 8 verschiedene Einbauhöhen erreichen, dann sind noch gewisse, nachfolgend erläuterte Zusatzvorkehrungen erforderlich.

Diese Zusatzvorkehrungen bestehen darin, daß der Zentralstempel 15 als ein in sich längenverstellbares Schraubspindelsystem 30 ausgeführt ist, das eine Gewindehülse 31 und einen dazu koaxialen Gewindeschaft 32 aufweist. Die Gewindehülse 31 ist dabei drehfest an der Rückseite der Zwischenplatte 5 montiert, während der Gewindeschaft 32 Schrauben innerhalb dieser Gewindehülse 30 verlagert werden kann. Dem Drehantrieb des Gewindeschaftes 32 relativ zur Gewindehülse 31 des Schraubspindelsystems 30 ist dabei der als Hydromotor ausgelegte Stellmotor 23 und der Antrieb 24 dienlich. Der Stellmotor 23 bewegt dabei einen Dreh-Mitnehmer 33, z.B. in Form eines Vierkantdorns, der in ein komplementäres Mitnehmerprofil 34, bspw. einen Vierkantkanal, des Gewindeschaftes 32 eingreift, und zwar derart, daß er relativ zu diesem koaxial und längsverschiebbar angeordnet ist.

Für jeden Wechsel eines Formwerkzeuges 6 in der Schließeinheit 1 wird - vorzugsweise - das Schraubspindelsystem 30 in seine der kürzesten Wirklänge des Zentralstempels 15 entsprechende Grundstellung gefahren, und zwar durch entsprechende Betätigung des Stellmotors 23. Nach dem Einbau des neuen Formwerkzeuges 6 wird die Zwischenplatte 5 mit Hilfe der Fahrzylinder 9 in Richtung gegen die Endplatte 3 gefahren, bis die beiden Formhälften 7 und 8 des Formwerkzeuges 6 die Schließlage erreicht haben. In diesem Augenblick wird - automatisch - eine Endlagenabfrage bewirkt, die den Stellmotor 23 in Betrieb setzt, und zwar im Sinne einer Verlängerung der Wirklänge des Schraubspindelsystems 30 bzw. Zentralstempels 15. Diese Wirklängenveränderung findet unter schraubender Bewegung des Gewindeschaftes 32 innerhalb der Gewindehülse 31 statt, welche von dem als Kopfstück ausgebildeten Vielkeil- bzw. Sternprofilkörper 16 der Kupplung 14 mitgemacht wird.

Sobald während dieser schraubenden Bewegung des Gewindeschaftes 32 irgendeiner der Zähne der Vielkeil- bzw. Sternprofilierung 18 des Vielkeil- bzw. Sternprofilkörpers 16 auf den Initiator bzw. Auslöser 25 vor dem Vielkeil- bzw. Sternprofilkörper 17 der Kupplung 14 trifft, wird der Stellmotor 23 bzw. der hiervon betätigte Antrieb 24 in seiner Antriebsgeschwindigkeit verlangsamt. Dies hat zur Folge, daß sich auch die Winkelgeschwindigkeit bei der Drehung des Vielkeil- bzw. Sternprofilkörpers 16 relativ zum Vielkeil- bzw. Sternprofilkörper 17 verringert, bis zu einem Zeitpunkt, in welchem beide Initiatoren 25 und 26 des zusammengehörenden Paares 25/26 von einander benachbarten Zähnen der Vielkeil- bzw. Sternprofilierung 18 beeinflußt sind. In diesem Augenblick wird dann der Stellmotor 23 bzw. der Antrieb 24 völlig stillgesetzt, weil die Kupplung 14 für das jetzt eingebaute Formwerkzeug 6 in ihre Ausrückstellung gemäß Fig. 2 gelangt ist.

Vor Einleitung eines Spritzvorgangs im Formwerkzeug 6 wird über die aktivierten Initiatoren 25 und 26 der Stellmotor 23 und der Antrieb 24 in der Weise beeinflußt, daß die Kupplung aus ihrer Ausrückstellung nach Fig. 2 in die Einrückstellung nach Fig. 3 gelangt, in welcher dann die Initiatoren 27 und 28 aktiviert werden. Diese setzen den Stellmotor 23 bzw. den Antrieb 24 still und bewirken gleichzeitig bzw. anschließend eine Beaufschlagung des Druckkissens 11 mit Hydraulikdruck. Der Ringkolben 13 im Druckkissenzylinder 12 geht vor und überträgt mittels der eingerückten Kupplung 14 über den Zentralstempel 15 bzw. das Schraubspindelsystem 30 unabhängig von den Fahrzylindern 9 eine Schließkraft auf die Zwischenplatte 5, welche die beiden Formhälften 7 und 8 des Formwerkzeugs 6, bspw. mit 175 bar, zusammenhält.

Nach Beendigung des Spritzvorgangs im Formwerkzeug 6 wird der Druck im Druckkissen 11 abgebaut und damit die Kupplung 14 entlastet. Bei einfach wirkender Bauart des Druckkissens 11 werden Kolbenrückstoßer 35, bspw. mehrere kleine Druckmittelzylinder, beaufschlagt, die den Ringkolben 13 im Druckkissenzylinder 12 in seine Grundstellung zurückfahren und dabei einen Initiator 36 auslösen. Dieser beeinflußt wiederum den Stellmotor 23 bzw. den Antrieb 24 im Rückstellsinne, damit die Kupplung 14 aus ihrer Einrückstellung nach Fig. 3 wieder in die Ausrückstellung nach Fig. 2 gelangt. Dort werden dann über die Initiatoren 25 und 26 die Fahrzylinder 9 im Öffnungssinne mit Druckmittel beaufschlagt und die Zwischenplatte 5 zum Öffnen des Werkzeuges 6 bzw. zum Auseinanderfahren seiner beiden Formhälften 7 und 8 längs der Führungsholme 4 verschoben. Bei dieser Öffnungs-Verschiebebewegung der Zwischenplatte 5 taucht der Zentralstempel 15 bzw. das Schraubspindelsystem 30 ohne gegenseitige Behinderung der Vielkeil- bzw. Sternprofilkörper 16 und 17 in den Ringkolben 13 und den Durchlaß 29 der Endplatte 2 ein, bis der nächste Arbeitszyklus ausgelöst wird.

Aus den Fig. 2 und 3 der Zeichnung geht hervor, daß dem Druckkissen 11 drei Kolbenrückstoßer 35 zugeordnet sind, die in Umfangsrichtung gleichmäßig verteilt mit dem Ringkolben 13 zusammenwirken.

Die Kolbenrückstoßer 35 können natürlich entfallen, wenn das Druckkissen 11 eine doppelt wirkende Auslegung hat, also der Ringkolben 13 im Druckkissenzylinder 12 beidseitig mit Druckmittel beaufschlagt werden kann.

Erkennbar ist in Fig. 1 noch, daß der als Hydromotor ausgelegte Stellmotor 23 mit dem Antrieb 24 über eine Kupplung 37 in Wirkverbindung stehen kann, die sich gegebenenfalls als elektromagnetisch arbeitende Kupplung auslegen läßt, um über die paarweise 25/26 und 27/28 einander zugeordneten Initiatoren 25 bis 28 eine besonders exakte Ansteuerung der Ausrückstellung nach Fig. 2 und der Einrückstellung nach Fig. 3 sicherzustellen. Damit das Schraubspindelsystem 30 gebremst wird, muß als elektromagnetische Kupplung eine Kupplungs-Brems-Einrichtung zum Einsatz gelangen oder aber es muß eine andere Einrichtung zum Fixieren der Drehposition des Schraubspindelsystems 30 vorhanden sein.

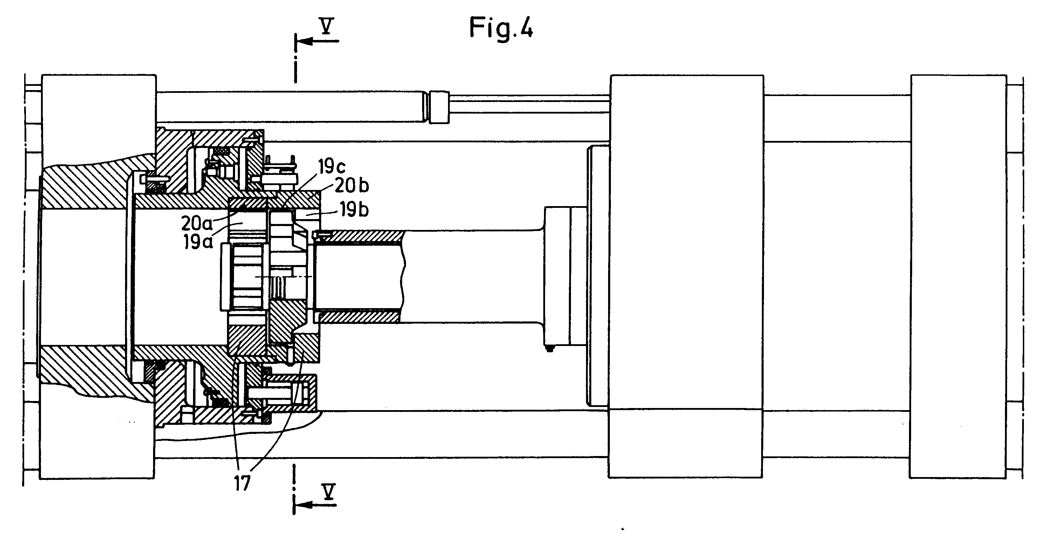

Die in den Fig. 4 bis 6 dargestellte Bauart einer Schließeinheit 1 stimmt weitestgehend mit derjenigen nach den Fig. 1 bis 3 überein.

Lediglich bezüglich der Auslegung der Kupplung 14 zwischen dem Druckkissen 11 und dem Zentralstempel 15 bzw. dem Schraubspindelsystem 30 ist eine bauliche und funktionelle Variation gegeben, die nachfolgend erläutert wird.

Diese bauliche und funktionelle Variation zielt dabei darauf ab, das Druckkissen 11 nicht nur zur Hervorbringung der Schließkraft für das Formwerkzeug 6 einzusetzen. Vielmehr soll es nach Beendigung eines jeden Spritzvorgangs auch den Öffnungsvorgang des Formwerkzeuges 6 einleiten, nämlich die Fahrzylinder 9 von der für das Auseinanderreißen der beiden Formhälften 7 und 8 benötigten, erhöhten Kraft entlasten.

Die hierzu notwendigen Vorkehrungen bestehen hauptsächlich darin, daß am Ringkolben 13 des Druckkissens 11 stirnseitig zwei Ringkörper 20a und 20b hintereinandergeschaltet so vorgesehen sind, daß sie miteinander den Vielkeil- bzw. Sternprofilkörper 17 bilden. Diese beiden Ringkörper 20a und 20b haben dabei einerseits eine übereinstimmende Innenprofilierung 19a und 19b und zwischen ihnen ist andererseits über einen die Dicke des als Kopfstück vorgesehenen Vielkeil- bzw. Sternprofilkörpers 16 geringfügig überschreitenden Längenbereich ein Freiraum 19c vorhanden, der durch Freischneiden bzw. Hinterschneiden der Innenprofilierung 19b im Ringkörper 20b gebildet sein kann.

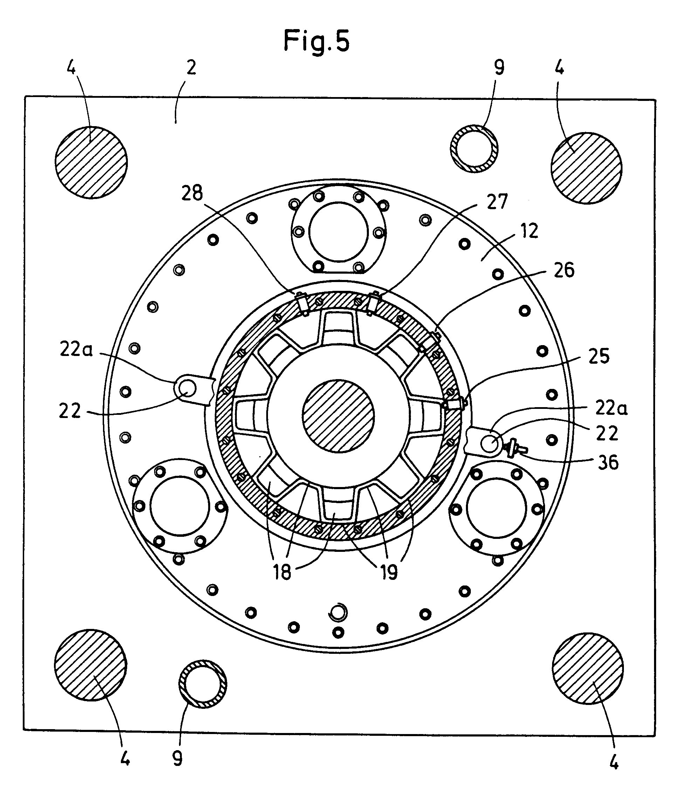

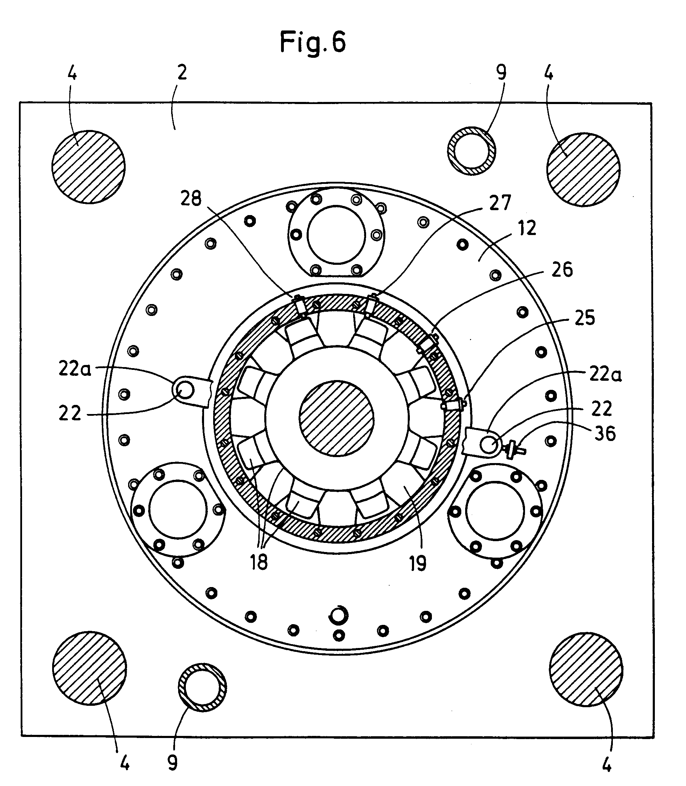

Innerhalb dieses Freiraums 19c läßt sich der Vielkeil- bzw. Sternprofilkörper 16 des Zentralstempels 15 bzw. des Hauptspindelsystems 30 in der bereits vorher - anhand der Fig. 1 bis 3 - beschriebenen Art und Weise zwischen der Ausrückstellung der Kupplung 14 nach Fig. 5 und der Einrückstellung der Kupplung 14 nach Fig. 6 verstellen.

Erkennbar ist aus den Fig. 4 bis 6 als weitere Abweichung gegenüber den Fig. 1 bis 3 noch, daß dort die paarweise 25/26 und 27/28 einander zugeordneten Initiatoren 25, 26 und 27, 28 innerhalb des Freiraumes 19c untergebracht sind, daß sie sich also nur durch eine Drehwinkelveränderung des Vielkeil- bzw. Sternprofilkörpers 16 beeinflussen lassen, wenn dessen Vielkeil bzw. Sternprofilierung 18 ordnungsgemäß in den Freiraum 19c des Vielkeil- bzw. Sternprofilkörpers 17 eingetaucht ist.

Während in der Einrückstellung der Kupplung 14 nach Fig. 6 mit Hilfe des Druckkissens 11 sowohl Druck- als auch Zugkräfte über den Zentralstempel 15 bzw. das Schraubspindelsystem 30 auf die Zwischenplatte 5 zur Einwirkung gebracht werden können, ist es in der Ausrückstellung nach Fig. 5 der Zeichnung nicht nur möglich, den Zentralstempel 15 bzw. das Schraubspindelsystem 30 durch den Ringkolben 13 des Druckkissens 11 und den Durchlaß 29 der Endplatte 2 eintauchen zu lassen, sondern darüber hinaus auch in der entgegengesetzten Richtung den Vielkeil- bzw. Sternprofilkörper 16 der Kupplung 14 durch die Innenprofilierung 19b des Ringkörpers 20b vom Ringkolben 13 des Druckkissens 11 völlig zu lösen.

Auch das Druckkissen 11 nach Fig. 4 kann wahlweise bei einfach wirkender Auslegung mit den zusätzlichen Kolbenrückstoßern 35 zusammenarbeiten oder aber als doppelt wirkendes Druckkissen ausgelegt werden.

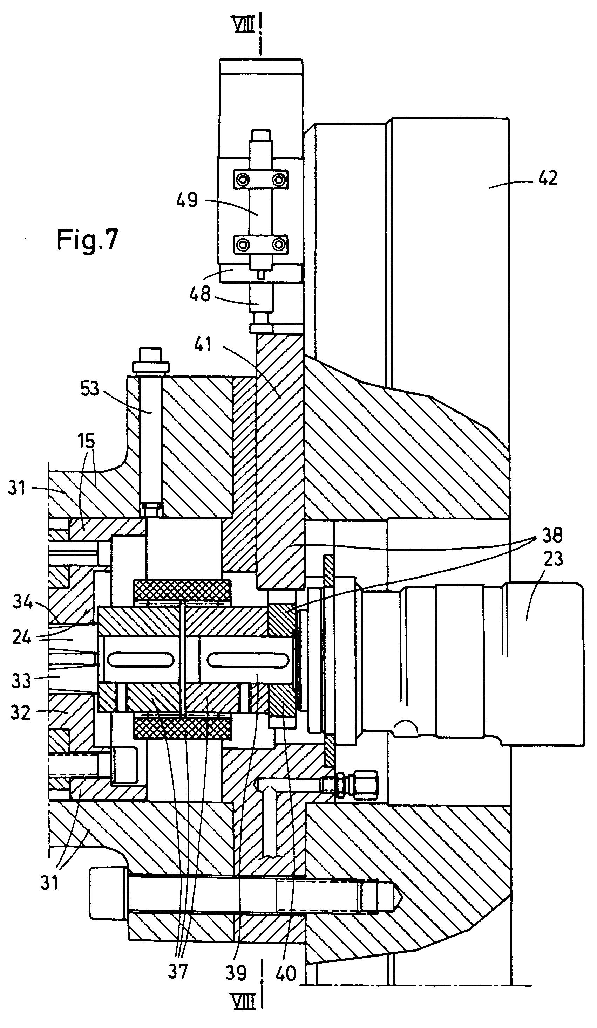

In den Fig. 7 bis 10 der Zeichnung sind gegenüber den Fig. 1 bis 6 abgewandelte Einzelheiten einer Schließeinheit 1 für Spritzgießmaschinen zu sehen. Dabei zeigt die Fig. 7 lediglich den Endbereich des an der Zwischenplatte bzw. beweglichen Aufspannplatte 5 einer Schließeinheit 1 angreifenden Endbereich eines Zentralstempels 15, der als Schraubspindelsystem 30 mit einer äußeren Gewindehülse 31 und einem inneren Gewindeschaft 32 ausgelegt ist, wie dies bereits vorstehend, insbesondere anhand der Fig. 1 bis 4 der Zeichnung ausführlich erläutert wurde.

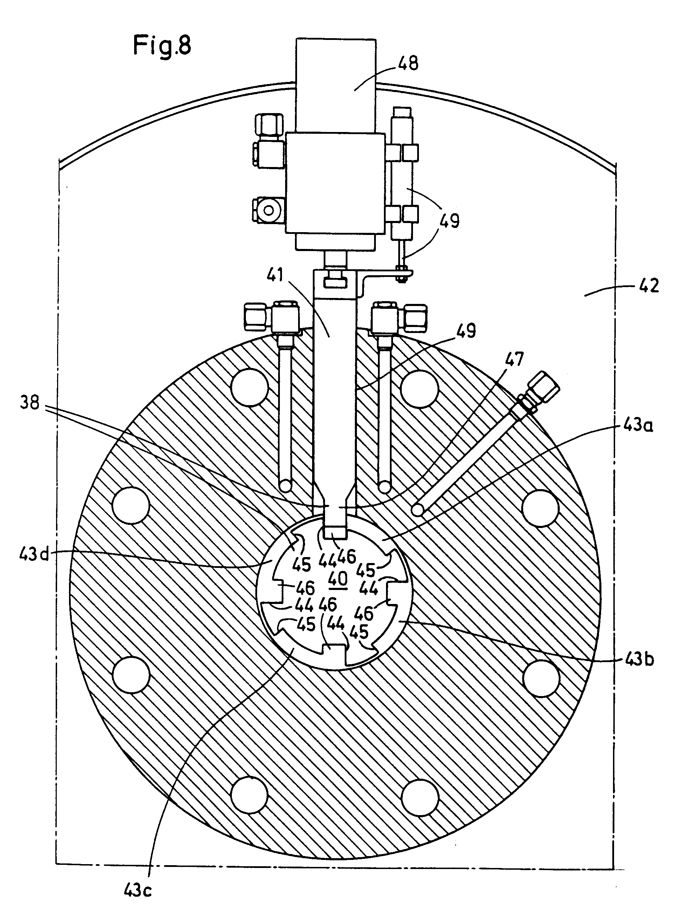

Abweichend von den Ausführungsbeispielen nach den Fig. 1 bis 6 ist in den Fig. 7 und 8 zu sehen, daß dem Schraubspindelsystem 30 und/oder dem Stellmotor 23 auch ein Festanschlagsystem 38 zugeordnet werden kann. Dieses Festanschlagsystem 38 besteht dabei aus einer bspw. auf die Welle 39 des Stellmotors 23 aufgekeilten Arretierscheibe 40 und einem relativ dazu in Radialrichtung in drei verschiedene Funktionsstellungen verlagerbaren Stellstück 41, das an einer mit der Zwischenplatte bzw. beweglichen Aufspannplatte 5 der Schließeinheit 1 verbindbaren Tragplatte 42 geführt wird.

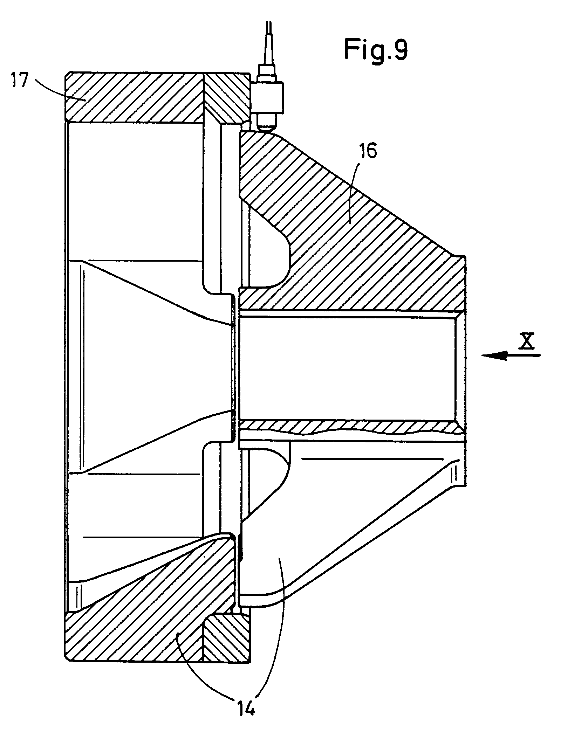

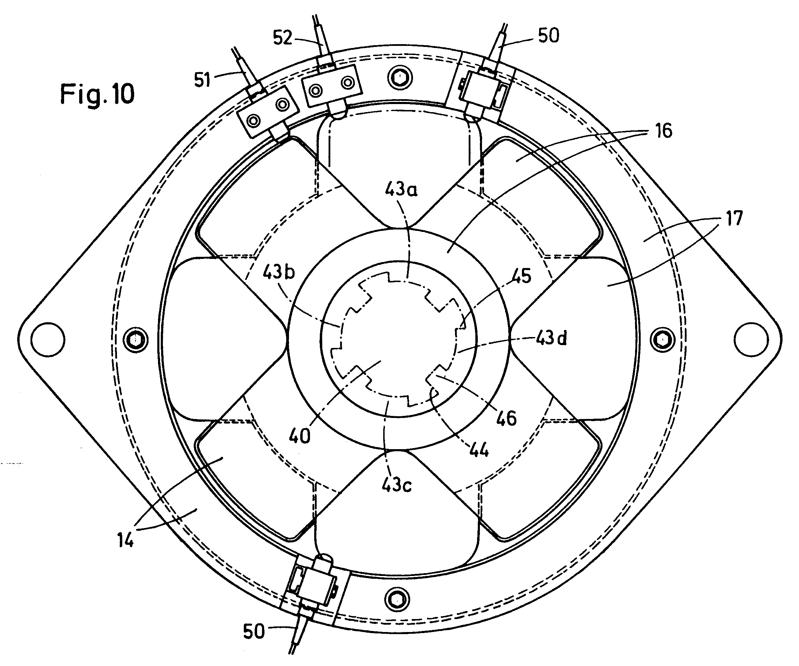

Die Arretierscheibe 40 des Festanschlagsystems 38 ist an ihrem Umfang mit einer der Armzahl der in den Fig. 9 und 10 dargestellten Vielkeil- bzw. Sternprofilkörper 16 und 17 der Kupplung 14 entsprechenden Anzahl - bspw. vier - Drehbegrenzungselementen 43a, 43b, 43c, 43d versehen, deren jedes von einem Umfangseinschnitt in der Arretierscheibe 40 gebildet ist, der sich über einen bestimmten Winkelbereich, bspw. je über 45° erstreckt und durch zwei radiale Anschlagflächen 44 und 45 begrenzt wird. Darüber hinaus ist jeder Anschlagfläche 44 der Drehbegrenzungselemente 43a bis 43d noch ein Verriegelungselement in Form eines radial einwärts gerichteten Einschnitt 46 zugeordnet.

Mit jedem der Drehbegrenzungselemente 43a bis 43d bzw. dessen Anschlagflächen 44 und 45 und dessen Verriegelungselement 46 kann das Stellstück 41 über einen Riegelansatz 47 in Wirkverbindung treten. Zu diesem Zweck läßt sich das Stellstück 41 über eine Betätigungsvorrichtung 48, bspw. einen Druckmittelzylinder, innerhalb der radialen Führung 49 der Tragplatte 42 mit seinem Riegelansatz 47 in drei verschiedene Funktionsstellungen bringen. In der mittleren Funktionsstellung des Stellstückes 41, wie sie in Fig. 8 der Zeichnung zu sehen ist, liegt sein Riegelansatz im Wirkbereich der beiden Anschlagflächen 44 und 45 irgendeines der Drehbegrenzungselemente 43a bis 43d, bspw. des Drehbegrenzungselementes 43a. Damit ist dann der Antriebs-Drehbereich für den Stellmotor 23 folglich auch für den Gewindeschaft 32 des Schraubspindelsystems 30 auf 45° eingeschränkt. Folglich kann der Vielkeil- bzw. Sternprofilkörper 16 relativ zum Vielkeil- bzw. Sternprofilkörper 17 auch nur um 45° verdreht werden. Folglich läßt sich der Vielkeil- bzw. Sternprofilkörper 16 relativ zum Vielkeil- bzw. Sternprofilkörper 17 lediglich zwischen seiner entkuppelten Deckungslage und seiner gekuppelten versetztlage umstellen. Die gekuppelte Versetztlage der beiden Vielkeil- bzw. Sternprofilkörper 16 und 17 läßt sich über das Stellstück 41 dadurch fixieren, daß dessen Riegelansatz 47 in den der jeweils anliegenden Anschlagfläche 44 als Verriegelungselement benachbarten Einschnitt 46 der Arretierscheibe 40 eingerückt wird.

Andererseits ist ein freier Drehantrieb des Gewindeschaftes 32 im Schraubspindelsystem 30 durch den Stellmotor 23 dann möglich, wenn der Riegelansatz 47 des Stellstücks 41 über die Betätigungsvorrichtung 48 gänzlich aus dem Bereich der Drehwegbegrenzungselemente 43a bis 43d zurückgezogen wird. Es ist dann problemlos möglich, den vom Schraubspindelsystem 30 gebildeten Zentralstempel 15 in seiner Länge so zu erstellen, daß er vom Druckkissen 11 aus zur Schließkrafterzeugung auf das mit der Schließeinheit 1 in seine Schließlage gebrachte Formwerkzeug 6 einwirken kann.

Die drei verschiedenen Funktionssstellungen des Stellstückes 41 mit seinem Riegelansatz 47 relativ zur Arretierscheibe 40 werden von einem Wegerfassungsgeber 49 überwacht, welcher bspw. der Betätigungsvorrichtung 48 zugeordnet ist. Dabei arbeitet die Betätigungsvorrichtung 48 und/oder der Wegerfassungsgeber 49 mit verschiedenen Initiatoren 50, 51, 52, 53 zusammen. Die Initiatoren 50 bis 52 sind dabei der Kupplung 14 an ihrem Vielkeil- bzw. Sternprofilkörper 17 zugeordnet und wirken mit dem anderen Vielkeil- bzw. Sternprofilkörper 16 zur wechselweisen Einstellung ihrer entkuppelten Deckungslage bzw. gekuppelten Versetztlage zusammen. Andererseits ist der Initiator 53 dem Schraubspindelsystem 30 zwischen der Gewindehülse 31 und dem Gewindeschaft 32 zugeordnet, welcher in der hinteren Position des Gewindeschafts 32 die Betätigungsvorrichtung 48 aktiviert und damit über das Stellstück 41 den Riegelansatz 47 relativ zur Arretierscheibe 40 aus seiner Freigabestellung in die - mittlere - Drehwegbegrenzungsstellung in irgendeines der Drehwegbegrenzungselemente 43 bis 43d überführt, wie dies in Fig. 8 angedeutet ist. Nunmehr läßt sich der Gewindeschaft 32 relativ zur Gewindehülse 31 nur noch über einen Winkelbereich hinweg verdrehen, der durch die beiden Anschläge 44 und 45 des betreffenden Drehwegbegrenzungselementes 43a bis 43d bestimmt ist.

Die Funktion einer Schließeinheit 1 mit dem aus den Fig. 7 bis 10 ersichtlichen Aufbau ist folgendermaßen:
Für den Wechsel eines Formwerkzeuges 6 in der Schließeinheit 1 befindet sich nach einem voraufgegangenen Arbeitszyklus das Festanschlagsystem 38 in dem der Fig. 8 entsprechenden Funktionseingriff. Durch ein über die Steuerung der Spritzgießmaschine gegebenes Werkzeugwechsel-Signal wird das Festanschlagsystem 38 in seine Freigabestellung gebracht. Nunmehr findet eine Verstellung des den Zentralstempel 15 bildenden Schraubspindelsystems 30 statt, bis in der hinteren Position des Gewindeschaftes 32 der Initiator 53 anspricht. Dieser beeinflußt nun die Betätigungsvorrichtung 48 in der Weise, daß das Festanschlagsystem 38 wieder in eine Drehwegbegrenzungsstellung gelangt, bei welcher die Riegelansatz 47 in irgendeines der Drehwegbegrenzungselemente 43a bis 43d eingreift. Der Drehantrieb des Gewindeschaftes 32 innerhalb der Gewindehülse 31 des Schraubspindelsystems 30 wird dabei so lange noch fortgeführt, bis die Anschlagfläche 44 des betreffenden Drehwegbegrenzungselementes 43a bis 43d gegen den Riegelansatz 47 trifft und damit der Stellmotor 23 gegen Weiterdrehung blockiert wird. Das Blockieren des bspw. als Hydromotor ausgelegten Stellmotors 23 führt zu einem Druckanstieg, der von einem Drucksensor aufgenommen wird. Der Drucksensor beeinflußt sodann die Betätigungsvorrichtung 48 in der Weise, daß dieser das Stellstück 41 und damit den Riegelansatz 47 in seine Riegelstellung bewegt, so daß dieser in den der Anschlagfläche 44 als Verriegelungselement benachbarten Einschnitt 46 der arretierscheibe 40 einrückt. Es wird somit eine endgültige Position der arretierscheibe 40 und folglich auch des Gewindeschaftes 32 im Schraubspindelsystem 30 gesichert. In dieser Position kann nun die Schließeinheit 1 durch Verfahren der Zwischenplatte bzw. beweglichen Aufspannplatte 5 für den Werkzeugwechsel geöffnet werden.

Durch das Zusammenfahren der beiden Formhälften 7 und 8 des Formwerkzeuges im Einrichtbetrieb der Schließeinheit wird wiederum das Festanschlagsystem 38 unwirksam gemacht, so daß eine unbehinderte Verstellung des den Zentralstempel 15 bildenden Schraubspindelsystems 30 möglich wird. Dabei wird über den Stellmotor 23 und den Antrieb 24 der Gewindeschaft 32 in der Gewindehülse 31 so lange verstellt, bis die beiden Initiatoren 50 am Vielkeil- bzw. Sternprofilkörper 17 durch Auftreffen des Vielkeil- bzw. Sternprofilkörpers 16 ansprechen. Von den Initiatoren 50 wird dabei wiederum das Festanschlagsystem 38 ausgelöst, und zwar in der Weise, daß die Betätigungsvorrichtung 48 über das Stellstück 41 den Riegelansatz 47 in die - mittlere - Drehwegbegrenzungsstellung fährt, also in irgendeines der Drehwegbegrenzungselemente 43a bis 43d an der Arretierscheibe 40 einrückt. Sobald dann durch die begrenzte Weiterdrehung des Gewindeschaftes 32 die Anschlagfläche 44 erreicht ist, wird der Initiator 51 betätigt, weil dann die beiden Vielkeil- bzw. Sternprofilkörper 16 und 17 der Kupplung 14 relativ zueinander in ihre gekuppelte Versetztlage gelangt sind. Durch den Initiator 51 wird dann der Druckaufbau des Druckkissens 11 eingeleitet, damit über den Zentralstempel 15 und die Zwischenplatte bzw. bewegliche Aufspannplatte 5 die Schließkraft auf das Formwerkzeug 6 einwirken kann.

Nach erfolgtem Schließ- und Spritzvorgang wird der Stellmotor 23 mit entgegengesetzter Drehrichtung betätigt und dadurch über den Antrieb 24 eine Winkeldrehung des Gewindeschaftes 32 in der Gewindehülse 31 des Schraubspindelsystems 30 ausgelöst, die durch die Anschlagfläche 45 eines Drehwegbegrenzungselementes 43a bis 43d der Arretierscheibe 40 eingeschränkt ist. In dieser Position spricht dann der Initiator 52 an und signalisiert, daß die beiden Vielkeil- bzw. Sternprofilkörper 16 und 17 der Kupplung 14 relativ zueinander ihre entkuppelte Deckungslage einnehmen, die eine Öffnungsbewegung der Schließeinheit 1 ermöglicht, indem der Zentralstempel 15 bzw. das Schraubspindelsystem 30 in den Ringkolben 13 des Druckkissens 11 und den Durchlaß 29 der Endplatte 2 eintaucht, welche in den Fig. 1 und 4 zu sehen sind.

Der Stellmotor 23 des Antriebs 24 für das Schraubspindelsystem 30 kann als pneumatischer, hydraulischer oder elektrischer Servomotor ausgelegt werden.

Als elektrischer Servomotor kann in vorteilhafter Weise ein Schrittmotor mit Drehwegerfassung zum Einsatz gelangen, weil es auf diese Art und Weise möglich ist, nicht nur das Schraubspindelsystem 30, sondern auch die zugehörige Kupplung 14 zu betätigen, ohne daß hierbei das Festanschlagsystem 38 und die Initiatoren 50 bis 53 benötigt werden.

Abschließend sei noch erwähnt, daß die Schließkraft für das Formwerkzeug 6 über das Druckkissen 11 nicht nur statisch aufgebracht werden kann, sondern auch dynamisch in Form einer Preßkraft entlang eines durch die Hublänge des Druckkissens 11 begrenzten Weges. Letzteres ist besonders vorteilhaft bei der Durchführung eines sogenannten Spritzprägeverfahrens mit einem hierzu geeigneten Formwerkzeug 6.

## Patentansprüche

1. Schließeinheit (1) für Spritzgießmaschinen
- mit zwei Endplatten (2 und 3) und mehreren, z.B. vier, diese auf Abstand miteinander verbindenden Führungsholmen (4),
- mit einer zu den Endplatten (2 und 3) parallelen und längs der Führungsholme (4) verschiebbaren Zwischenplatte (5),
- mit Fahrzylindern (9), die an einer Endplatte (2) ihr Widerlager haben und über ihre Kolbenstangen (10) an der Zwischenplatte (5) angreifen sowie diese Zwischenplatte (5) zur Abstandsänderung gegenüber der anderen Endplatte (3) entlang der Führungsholme (4) in Schließ- und Öffnungsrichtung verlagern,
- wobei die Zwischenplatte (5) und die andere Endplatte (3) jeweils eine Aufspannplatte für die beiden Formhälften (8 und 7) eines Formwerkzeugs (6) bilden,
- wobei das mittels der beiden Aufspannplatten in seine Schließstellung gebrachte Formwerkzeug (6) über ein zwischen die eine Endplatte (3) und die Zwischenplatte (5) einschaltbares, an einem Zentralstempel (15) angreifendes Druckkissen (11) unter eine erhöhte Schließkraft setzbar ist,
- wobei vorzugsweise der Zentralstempel (15) in seiner Länge auf unterschiedliche Abstände zwischen der das Formwerkzeug (6) in seiner Schließstellung haltenden Zwischenplatte (5) bzw. beweglichen Formaufspannplatte und der einen Endplatte (3) bzw. ortsfesten Formaufspannplatte einstellbar ist,
- wobei der Zentralstempel (15) ausschließlich bei Schließstellung des Formwerkzeuges (6) mit dem Druckkissen (11) wahlweise kuppelbar und entkuppelbar ist,
- wobei als Kupplung zwischen dem Zentralstempel (15) und dem Druckkissen (11) zwei Vielkeil- oder Sternprofilkörper (16 und 17) vorgesehen und in einer Normalrichtung zur Öffnungs- und Schließrichtung des Formwerkzeugs (6) gegeneinander begrenzt winkelverdrehbar (23, 24) angeordnet sind,
- wobei der Vielkeil- oder Sternprofilkörper (16) am freien Ende des Zentralstempels (15) ein dessen Umfang mit seiner Profilierung (18) überragendes Kopfstück ist, während das Druckkissen (11) als Vielkeil- bzw. Sternprofilkörper (17) einen Ringkolben (13) mit einer komplementären Innenprofilierung (19) aufweist,
- wobei das Kopfstück (16) des Zentralstempels (15) durch einen Antrieb (23, 24) zumindest begrenzt drehwinkelverstellbar vorgesehen ist,
- und wobei der Antrieb (23, 24) des Kopfstücks (16) einerseits in der entkuppelten Deckungslage und andererseits in der gekuppelten Versetztlage der beiden Vielkeil- bzw. Sternprofilkörper (16 und 17) begrenzbar ist,
**dadurch gekennzeichnet,**
- daß der Antrieb (23, 24) des Kopfstücks (16) mit einem Stellmotor (23), insbesondere einem pneumatischen, hydraulischen oder elektrischen Servomotor, ausgestattet ist,
- und daß am Ringkolben (12) des Druckkissens (11) vor der Innenprofilierung (19) zwei Gruppen (25/26 und 27/28) von Initiatoren (25, 26, 27, 28) für den Antrieb (23, 24) des Kopfstücks (16) sitzen, von denen die eine Gruppe (25/26) der entkuppelten Deckungslage (2) und die andere Gruppe (27/28) der gekuppelten Versetztlage (Fig. 3) der beiden Vielkeil- bzw. Sternprofilkörper (16 und 17) zugeordnet ist.

2. Schließeinheit für Spritzgießmaschinen
- mit zwei Endplatten (2 und 3) und mehreren, z.B. vier, diese auf Abstand miteinander verbindenden Führungsholmen (4),
- mit einer zu den Endplatten (2 und 3) parallelen und längs der Führungsholme (4) verschiebbaren Zwischenplatte (5),
- mit Fahrzylindern (9), die an einer Endplatte (2) ihr Widerlager haben und über ihre Kolbenstangen (10) an der Zwischenplatte (5) angreifen sowie diese Zwischenplatte (5) zur Abstandsänderung gegenüber der anderen Endplatte (3) entlang der Führungsholme (4) in Schließ- und Öffnungsrichtung verlagern,
- wobei die Zwischenplatte (5) und die andere Endplatte (3) jeweils eine Aufspannplatte für die beiden Formhälften (8 und 7) eines Formwerkzeugs (6) bilden,
- wobei das mittels der beiden Aufspannplatten in seine Schließstellung gebrachte Formwerkzeug (6) über ein zwischen die eine Endplatte (3) und die Zwischenplatte (5) einschaltbares, an einem Zentralstempel (15) angreifendes Druckkissen (11) unter eine erhöhte Schließkraft setzbar ist,
- wobei vorzugsweise der Zentralstempel (15) in seiner Länge auf unterschiedliche Abstände zwischen der das Formwerkzeug (6) in seiner Schließstellung haltenden Zwischenplatte (5) bzw. beweglichen Formaufspannplatte und der einen Endplatte (3) bzw. ortsfesten Formaufspannplatte einstellbar ist,
- wobei der Zentralstempel (15) ausschließlich bei Schließstellung des Formwerkzeuges (6) mit dem Druckkissen (11) wahlweise kuppelbar und entkuppelbar ist,
- wobei als Kupplung zwischen dem Zentralstempel (15) und dem Druckkissen (11) zwei Vielkeil- oder Sternprofilkörper (16 und 17) vorgesehen und in einer Normalrichtung zur Öffnungs- und Schließrichtung des Formwerkzeugs (6) gegeneinander begrenzt winkelverdrehbar (23, 24) angeordnet sind,
- wobei der Vielkeil- oder Sternprofilkörper (16) am freien Ende des Zentralstempels (15) ein dessen Umfang mit seiner Profilierung (18) überragendes Kopfstück ist, während das Druckkissen (11) als Vielkeil- bzw. Sternprofilkörper (17) einen Ringkolben (13) mit einer komplementären Innenprofilierung (19) aufweist,
- wobei das Kopfstück (16) des Zentralstempels (15) durch einen Antrieb (23, 24) zumindest begrenzt drehwinkelverstellbar vorgesehen ist,
- und wobei der Antrieb (23, 24) des Kopfstücks (16) einerseits in der entkuppelten Deckungslage und andererseits in der gekuppelten Versetztlage der beiden Vielkeil- bzw. Sternprofilkörper (16 und 17) begrenzbar ist,
**dadurch gekennzeichnet,**
- daß der Antrieb (23, 24) des Kopfstücks (16) mit einem Stellmotor (23), insbesondere einem Servomotor, ausgestattet ist, der aus einem Schrittmotor mit Drehwegerfassung besteht,
- wobei eine Drehwegbegrenzung der entkuppelten Deckungslage und die andere Drehwegbegrenzung der entkuppelten Versetztlage der beiden Vielkeil- bzw. Sternprofilkörper (16 und 17) zugeordnet ist.

3. Schließeinheit nach einem der
Ansprüche 1 und 2,
**dadurch gekennzeichnet,**
daß der Zentralstempel (15) als ein in sich längenverstellbares Schraubspindelsystem (30) mit einer Gewindehülse (31), einem dazu koaxialen Gewindeschaft (32) und einem Stellmotor (23) ausgeführt ist, wobei der Gewindeschaft (32) mit dem Kopfstück (16) durch den Stellmotor (23) in der Gewindehülse (31) schraubend verdrehbar und damit relativ zum Ringkolben (13) des Druckkissens (11) axial verlagerbar ist, und wobei diese Axialverlagerung im Bereich des Ringkolbens (13) - entweder über die Initiatoren (25) oder über den Schrittmotor - verlangsambar zusätzlich winkelbegrenzbar ist.

4. Schließeinheit nach einem der Ansprüche 1 bis 3,
**dadurch gekennzeichnet,**
daß der die Innenprofilierung (19) aufweisende Vielkeil- bzw. Sternprofilkörper (17) am Ringkolben (13) des Druckkissens (11) von einem stirnseitig an diesem lösbar (21) befestigten Ringkörper (20) gebildet ist, welcher aus der Stirnwand des Druckkissenzylinders (13) herausragt und an dieser drehfest geführt ist (22, 22a), und daß der Ringkörper (20) stirnseitig die Initiatoren (25, 26 und 27, 28) trägt.

5. Schließeinheit nach einem der Ansprüche 1 bis 4,
**dadurch gekennzeichnet,**
daß am Ringkolben (13) des Druckkissens (11) stirnseitig zwei Ringkörper (20a und 20b) als Vielkeil- bzw. Sternprofilkörper (17) hintereinandergeschaltet sind, die einerseits eine übereinstimmende Innenprofilierung (19a und 19b) haben und zwischen denen andererseits über einen die Dicke des Kopfstücks (16) geringfügig überschreitenden Längenbereich die Innenprofilierung freigeschnitten bzw. hinterschnitten (19c) ist.

6. Schließeinheit nach einem der Ansprüche 1 bis 5,
**dadurch gekennzeichnet,**
daß der Stellmotor (23) ein Hydromotor ist, der in der Zwischenplatte (5) und der Gewindehülse (31) des Schraubspindelsystems (30) sitzt sowie mit einem Dreh-Mitnehmer, z.B. einem Vierkantdorn (33), koaxial und verschiebbar in den Gewindeschaft (32) eingreift (34).

7. Schließeinheit nach einem der Ansprüche 1 bis 6,
**dadurch gekennzeichnet,**
daß das Druckkissen (11) mit dem im Druckkissenzylinder (12) befindlichen Ringkolben (13) einfach wirkend ausgelegt ist und am Druckkissenzylinder (12) mehrere, z.B. drei, kleinvolumige Rückstoßzylinder bzw. Kolbenrückstoßer (35) für den Ringkolben (13) besitzen.

8. Schließeinheit nach einem der Ansprüche 1 bis 8,
**dadurch gekennzeichnet,**
daß das Druckkissen (11) mit dem im Druckkissenzylinder (12) befindlichen Ringkolben (13) doppelt wirkend ausgelegt ist.

9. Schließeinheit nach einem der Ansprüche 1 bis 8,
**dadurch gekennzeichnet,**
daß die eine Endplatte (2) koaxial zum Ringkolben (13) des Druckkissens (11) einen Durchlaß (29) aufweist, durch den der mit der Zwischenplatte verbundene Zentralstempel (15) bzw. das diesen bildende Schraubspindelsystem (30) bei der Öffnungsbewegung des Formwerkzeugs (6) rückstellbewegbar ist.

10. Schließeinheit nach einem der Ansprüche 1 und 3,
**gekennzeichnet durch**
ein dem Schraubspindelsystem (30) und/oder dem Stellmotor (23) zugeordnetes Festanschlagsystem (38), das eine erste Drehwegbegrenzung (45/47) für mindestens eine entkuppelte Deckungslage und eine zweite Drehwegbegrenzung (44/47) für mindestens eine gekuppelte Versetztlage der beiden Vielkeil- bzw. Sternprofilkörper (16 und 17) umfaßt und außerdem für die jeweilige gekuppelte Versetztlage eine zusätzliche Verriegelung (46/47) aufweist (Fig. 7 bis 10).

11. Schließeinheit nach Anspruch 10,
**dadurch gekennzeichnet,**
daß das Festanschlagsystem (38) eine der Armzahl der Vielkeil- bzw. Sternprofilkörper (16 und 17) entsprechende Anzahl von Drehbegrenzungselementen (43a, 43b, 43c, 43d) und Verriegelungselementen (46) umfaßt (fig. 8 und 10).

12. Schließeinheit nach einem der Ansprüche 10 und 11,
**dadurch gekennzeichnet,**
daß mit dem Festanschlagsystem (38) ein Stellstück (41) in Wirkverbindung steht, das aus einer Freigabestellung wahlweise in eine Drehwegbegrenzungsstellung (Fig. 8) und in eine Riegelstellung bewegbar ist (48).

13. Schließeinheit nach einem der Ansprüche 10 bis 12,
**dadurch gekennzeichnet,**
daß die Riegelstellung (46/47) des Stellstücks (41) ausschließlich in der gekuppelten Verdrehlage der beiden Vielkeil- bzw. Sternprofilkörper (16 und 17) einrückbar ist (48).

14. Schließeinheit nach einem der Ansprüche 10 bis 13,
**dadurch gekennzeichnet,**
daß das Festanschlagsystem (38) eine mit der Welle (39) des Stellmotors (23) verkeilte Arretierscheibe (40) mit mehreren in Umfangsrichtung gleichmäßig verteilt angeordneten Drehwegbegrenzungselementen (43a bis 43d) aufweist, daß jedes der Drehwegbegrenzungselemente (43a bis 43d) zwei Anschlagflächen (44 und 45) für einen Riegelansatz sowie benachbart der einen Anschlagfläche (44) zusätzlich einen Einschnitt (46) als Verriegelungselement für den Riegelansatz (47) enthält und daß der Riegelansatz (47) Teil eines durch eine Betätigungsvorrichtung (48) über einen Wegerfassungsgeber (49) bewegbaren Stellstücks (41) ist.

## Claims

1. Closure unit (1) for injection moulding machines,
- with two end plates (2 and 3) and several, for example four, guide beams (4) connecting these together at a spacing,
- with an intermediate plate (5) displaceable relative to the end plates (2 and 3) parallelly and longitudinally of the guide beams (4),
- with drive cylinders (9), which have their counter support at one end plate (2) and engage at the intermediate plate (5) by way of their piston rods (10) as well as displace this intermediate plate (5) for change in spacing relative to the other end plate (3) along the guide beams (4) in closing and opening direction,
- wherein the intermediate plate (5) and the other end plate (3) each form a respective carrier plate for the two mould halves (8 and 7) of a mould tool (6),
- wherein the mould tool (6), which is brought into its closed setting by means of the two carrier plates, is placeable under an elevated closing force by way of a pressure pad (11) which can be clutched in between the one end plate (3) and the intermediate plate (5) and engages at a central ram (15),
- wherein preferably the central ram (15) is adjustable in its length to different spacings between the intermediate plate (5) or movable mould carrier plate holding the mould tool (6) in its closed setting and the one end plate (3) or stationary mould carrier plate,
- wherein the central ram (15) is selectably couplable to and uncouplable from the pressure pad (11) exclusively in closed setting of the mould tool (6),
- wherein two multi-wedge or star profile bodies (16 and 17) are provided as coupling between the central ram (15) and the pressure pad (11) and arranged to be limitedly angularly rotatable (23, 24) relative to one another in a direction normal to the opening and closing direction of the mould tool (6),
- wherein the multi-wedge or star profile body (16) at the free end of the central ram (15) is a head piece projecting at the circumference thereof by its profiling (18), whilst the pressure pad (11) has an annular piston (13) with a complementary inner profiling (19) as multi-wedge or star profile body (17),
- wherein the head piece (16) of the central ram (15) is provided to be at least limitedly angularly adjustable by a drive (23, 24),
- and wherein the drive (23, 24) of the head piece (16) can be limited on the one hand in the uncoupled congruent position and on the other hand in the coupled offset position of the two multi-wedge or star profile bodies (16 and 17),
characterised thereby
- that the drive (23, 24) of the head piece (16) is equipped with a setting motor (23), particularly a pneumatic, a hydraulic or an electric servomotor,
- and that two groups (25/26 and 27/28) of initiators (25, 26, 27, 28) for the drive (23, 24) of the head piece (16) are seated at the annular piston (12) of the pressure pad (11) in front of the inner profiling (19), of which the one group (25/26) is associated with the uncoupled congruent position (2) and the other group (27/28) with the coupled offset position (Fig. 3) of the two multi-wedge or star profile bodies (16 and 17).

2. Closure unit for injection moulding machines,
- with two end plates (2 and 3) and several, for example four, guide beams (4) connecting these together at a spacing,
- with an intermediate plate (5) displaceable relative to the end plates (2 and 3) parallelly and longitudinally of the guide beams (4),
- with drive cylinders (9), which have their counter support at one end plate (2) and engage at the intermediate plate (5) by way of their piston rods (10) as well as displace this intermediate plate (5) for change in spacing relative to the other end plate (3) along the guide beams (4) in closing and opening direction,
- wherein the intermediate plate (5) and the other end plate (3) each form a respective carrier plate for the two mould halves (8 and 7) of a mould tool (6),
- wherein the mould tool (6), which is brought into its closed setting by means of the two carrier plates, is placeable under an elevated closing force by way of a pressure pad (11) which can be clutched in between the one end plate (3) and the intermediate plate (5) and engages at a central ram (15),
- wherein preferably the central ram (15) is adjustable in its length to different spacings between the intermediate plate (5) or movable mould carrier plate holding the mould tool (6) in its closed setting and the one end plate (3) or stationary mould carrier plate,
- wherein the central ram (15) is selectably couplable to and uncouplable from the pressure pad (11) exclusively in closed setting of the mould tool (6),
- wherein two multi-wedge or star profile bodies (16 and 17) are provided as coupling between the central ram (15) and the pressure pad (11) and arranged to be limitedly angularly rotatable (23, 24) relative to one another in a direction normal to the opening and closing direction of the mould tool (6),
- wherein the multi-wedge or star profile body (16) at the free end of the central ram (15) is a head piece projecting at the circumference thereof by its profiling (18), whilst the pressure pad (11) has an annular piston (13) with a complementary inner profiling (19) as multi-wedge or star profile body (17),
- wherein the head piece (16) of the central ram (15) is provided to be at least limitedly angularly adjustable by a drive (23, 24),
- and wherein the drive (23, 24) of the head piece (16) can be limited on the one hand in the uncoupled congruent position and on the other hand in the coupled offset position of the two multi-wedge or star profile bodies (16 and 17),
characterised thereby
- that the drive (23, 24) of the head piece (16) is equipped with a setting motor (23), particularly a servomotor, which consists of a stepping motor with rotational travel detection,
- wherein one rotational movement limitation is associated with the uncoupled congruent position and the other rotational movement limitation with the [un]coupled offset position of the two multi-wedge or star profile bodies (16 and 17).

3. Closure unit according to one of claims 1 and 2, characterised thereby that the central ram (15) is executed as a screw spindle system (30), which is itself adjustable in length, with a threaded sleeve (31), a threaded shank (32) coaxial therewith and a setting motor (23), wherein the threaded shank (32) together with the head piece (16) is threadedly rotatable in the threaded sleeve (31) by the setting motor (23) and thus axially displaceable relative to the annular piston (13) of the pressure pad (11), and wherein this axial displacement can additionally be limited in the region of the annular piston (13) either by way of the initiators (25) or by way of the stepping motor.

4. Closure unit according to one of claims 1 to 3, characterised thereby that the multi-wedge or star profile body (17), which has the inner profiling (19), at the annular piston (13) of the pressure pad (11) is formed by an annular body (20) which is detachably fastened thereto at the end face, projects out of the end face of the pressure pad cylinder (13) and is guided at this to be secure against rotation (22, 22a) and that the annular body (20) carries the initiators (25, 26 and 27, 28) at the end face.

5. Closure unit according to one of claims 1 to 4, characterised thereby that two annular bodies (20a and 20b) are connected one behind the other at the annular piston (13) of the pressure pad (11) at the end face as multi-wedge or star profile body (17), which annular bodies on the one hand have a corresponding inner profiling (19a and 19b) and between which on the other hand the inner profiling is cut away or undercut (19c) over a longitudinal region slightly exceeding the thickness of the head piece (16).

6. Closure unit according to one of claims 1 to 5, characterised thereby that the setting motor (23) is a hydraulic motor which is seated in the intermediate plate (5) and the threaded sleeve (31) of the screw spindle system (30) as well as coaxially and displaceably engaged (34) in the threaded shank (32) by a rotational entrainer, for example a square plug.

7. Closure unit according to one of claims 1 to 6, characterised thereby that the pressure pad (11) is designed to be single-acting by the annular piston (13) disposed in the pressure pad cylinder (12) and possesses at the pressure pad cylinder (12) several, for example three, small-volume reaction cylinders or piston reaction devices (35) for the annular piston (13).

8. Closure unit according to one of claims 1 to 8, characterised thereby that the pressure pad (11) is designed to be double-acting by the annular piston (13) disposed in the pressure pad cylinder (12).

9. Closure unit according to one of claims 1 to 8, characterised thereby that the one end plate (2) has a through passage (29) which is coaxial with the annular piston (13) of the pressure pad (11) and through which the central ram (15), or the screw spindle system (30) forming this, connected with the intermediate plate is movable for resetting during the opening movement of the mould tool (6).

10. Closure unit according to one of claims 1 and 3, characterised by a fixed abutment system (38) associated with the screw spindle system (30) and/or the setting motor (23), which fixed abutment system comprises a first rotational movement limitation (45/47) for at least one uncoupled congruent position and a second rotational movement limitation (44/47) for at least one coupled offset position of the two multi-wedge or star profile bodies (16 and 17) and in addition has an additional locking (46/47) for the respective coupled offset position (Figs. 7 to 10).

11. Closure unit according to claim 10, characterised thereby that the fixed abutment system (38) comprises a number of rotational limiting elements (43a, 43b, 43c, 43d) and locking elements (46), which number corresponds to the number of multi-wedge or star profile bodies (16 and 17) (Figs. 8 and 9).

12. Closure unit according to one of claims 10 and 11, characterised thereby that a setting member (41), which is movable (48) from a release setting selectably into a rotational movement limiting setting (Fig. 8) and into a locking setting, stands in operative connection with the fixed abutment system (38).

13. Closure unit according to one of claims 10 to 12, characterised thereby that the locking setting (46/47) of the setting member (41) is engageable (48) exclusively in the coupled turned position of the two multi-wedge or star profile bodies (16 and 17).

14. Closure unit according to one of claims 10 to 13, characterised thereby that the fixed abutment system (38) comprises a locking disc (40), which is keyed to the shaft (39) of the setting motor (23), with several rotational movement limiting elements (43a to 43d) arranged uniformly distributed in circumferential direction, that each of the rotational movement limiting elements (43a to 43d) contains two abutment surfaces (44 and 45) for a locking projection as well as, adjacent to the one abutment surface (44), additionally a notch (46) as locking element for the locking projection (47), and that the locking projection (47) is a part of a setting member (41) movable by an actuating device (48) by way of a travel detection transmitter (49).

## Revendications

1. Unité de fermeture (1) pour des machines de moulage par injection,
- comportant deux plaques d'extrémité (2 et 3) et plusieurs, par exemple quatre, longerons de guidage (4) reliant lesdites plaques à une certaine distance les unes des autres,
- comportant une plaque intermédiaire (5) disposée parallèlement par rapport aux plaques d'extrémité (2 et 3) et pouvant être déplacée le long des longerons de guidage (4),
- comportant des vérins de déplacement (9) dont la butée se situe sur une plaque d'extrémité (2), qui s'agrippent via leur tige (10) de piston à la plaque intermédiaire (5) et qui déplacent cette plaque intermédiaire (5) de manière à modifier sa distance par rapport à l'autre plaque d'extrémité (3) le long des longerons de guidage (4) dans le sens de l'ouverture ou de la fermeture,
- la plaque intermédiaire (5) et l'autre plaque d'extrémité (3) formant chacune un plateau pour les deux moitiés de moule (8 et 7) d'un outil de moulage (6),
- l'outil de moulage (6), amené en position de fermeture à l'aide des deux plateaux, pouvant être soumis à une force de fermeture plus élevée à l'aide d'un coussin de pression (11) qui peut être inséré entre la plaque d'extrémité (3) et la plaque intermédiaire (5) et qui s'agrippe à un piston central (15),
- le piston central (15) pouvant de préférence être réglé sur sa longueur à différentes distances entre la plaque intermédiaire (5), ou plateau mobile, maintenant l'outil de moulage (6) dans sa position fermée et la plaque d'extrémité (3), ou plateau fixe,
- le piston central (15) pouvant au choix être accouplé au coussin de pression (11) ou découplé de celui-ci uniquement lorsque l'outil de moulage (6) est en position fermée,
- l'accouplement prévu entre le piston central (15) et le coussin de pression (11) étant deux pièces (16 et 17) à profil à cales multiples ou étoilé disposées de manière à pouvoir être pivotées d'un angle limité (23, 24) l'une par rapport perpendiculairement au sens d'ouverture et de fermeture de l'outil de moulage (6),
- la pièce (16) à profil à cales multiples ou étoilé étant une tête située au niveau de l'extrémité libre du piston central (15) dont le profil dépasse la périphérie dudit piston alors que le coussin de pression (11) présente comme pièce (17) à profil à cales multiples ou étoilé un piston annulaire (13) présentant un profil annulaire interne complémentaire,
- la tête (16) du piston central (15) étant prévue de manière à pouvoir être pivotée d'un angle limité à l'aide d'un mécanisme d'entraînement (23, 24) et
- le mécanisme d'entraînement (23, 24) de la tête (16) étant limité d'une part dans la position de recouvrement débrayée et d'autre part dans la position décalée embrayée des deux pièces (16 et 17) à profil à cales multiples ou étoilé, caractérisée
- en ce que le mécanisme d'entraînement (23, 24) de la tête (16) est équipé d'un moteur de réglage, en particulier un servomoteur pneumatique, hydraulique ou électrique et
- en ce que deux groupes (25/26 et 27/28) de commutateurs (25, 26, 27, 28) sont disposés sur le piston annulaire (12) du coussin de pression (11), devant le profil interne (19) pour l'entraînement (23, 24) de la tête, un groupe (25/26) correspondant à la position de recouvrement (2) débrayée et l'autre groupe (27/28) à la position décalée embrayée (fig. 3) des deux pièces à profil (16 et 17) à cales multiples ou étoilé.

2. Unité de fermeture pour des machines de moulage par injection,
- comportant deux plaques d'extrémité (2 et 3) et plusieurs, par exemple quatre, longerons de guidage (4) reliant lesdites plaques à une certaine distance les unes des autres,
- comportant une plaque intermédiaire (5) disposée parallèlement par rapport aux plaques d'extrémité (2 et 3) et pouvant être déplacée le long des longerons de guidage (4),
- comportant des vérins de déplacement (9) dont la butée se situe sur une plaque d'extrémité (2), qui s'agrippent via leur tige (10) de piston à la plaque intermédiaire (5) et qui déplacent cette plaque intermédiaire (5) de manière à modifier sa distance par rapport à l'autre plaque d'extrémité (3) le long des longerons de guidage (4) dans le sens de l'ouverture ou de la fermeture,
- la plaque intermédiaire (5) et l'autre plaque d'extrémité (3) formant chacune un plateau pour les deux moitiés de moule (8 et 7) d'un outil de moulage (6),
- l'outil de moulage (6), amené en position de fermeture à l'aide des deux plateaux, pouvant être soumis à une force de fermeture plus élevée à l'aide d'un coussin de pression (11) qui peut être inséré entre la plaque d'extrémité (3) et la plaque intermédiaire (5) et qui s'agrippe à un piston central (15),
- le piston central (15) pouvant de préférence être réglé sur sa longueur à différentes distances entre la plaque intermédiaire (5), ou plateau mobile, maintenant l'outil de moulage (6) dans sa position fermée et la plaque d'extrémité (3), ou plateau fixe,
- le piston central (15) pouvant au choix être accouplé ou découplé du coussin de pression (11), uniquement lorsque l'outil de moulage (6) est en position fermée,
- l'accouplement prévu entre le piston central (15) et le coussin de pression (11) étant deux pièces (16 et 17) à profit à cales multiples ou étoilé disposées de manière à pouvoir être pivotées d'un angle limité (23, 24) l'une par rapport perpendiculairement au sens d'ouverture et de fermeture de l'outil de moulage (6),
- la pièce (16) à profil à cales multiples ou étoilé étant une tête située au niveau de l'extrémité libre du piston central (15) dont le profit dépasse la périphérie dudit piston alors que le coussin de pression (11) présente comme pièce (17) à profit à cales multiples ou étoilé un piston annulaire (13) présentant un profit annulaire interne complémentaire,
- la tête (16) du piston central (15) étant prévue de manière à pouvoir être pivotée d'un angle limité à l'aide d'un mécanisme d'entraînement (23, 24) et
- le mécanisme d'entraînement (23, 24) de la tête (16) étant limité d'une part dans la position de recouvrement débrayée et d'autre part dans la position décalée embrayée des deux pièces (16 et 17) à profit à cales multiples ou étoilé, caractérisée
- en ce que le mécanisme d'entraînement (23, 24) de la tête (16) est équipé d'un moteur de réglage, en particulier un servomoteur formé d'un moteur pas-à-pas avec enregistrement du parcours de rotation effectué,
- une limite du parcours de rotation correspondant à la position de recouvrement débrayée et l'autre limite du parcours de rotation correspondant à la position décalée embrayée des deux pièces (16 et 17) à profil à cales multiples ou étoilé.

3. Unité de fermeture selon une quelconque des revendications 1 et 2, caractérisée en ce que le piston central (15) est exécuté sous forme d'un système à arbre fileté (30) pouvant être déplacé longitudinalement et constitué par une douille taraudée (31), une tige filetée (32) coaxiale à la douille et un moteur de réglage (23), la tige filetée (32) comportant la tête (16) pouvant être animée d'un mouvement de rotation qui la visse dans la douille taraudée (31) à l'aide du moteur de réglage (23) et se déplaçant donc axialement par rapport au piston annulaire (13) du coussin de pression, ce déplacement axial étant limité angulairement et ralentissant progressivement au niveau du piston angulaire (13), soit via les commutateurs (25) ou via le moteur pas-à-pas.

4. Unité de fermeture selon une quelconque des revendications 1 à 3, caractérisée en ce que la pièce (17) dont le profil interne est à cales multiples ou étoilé est formé sur le piston annulaire (13) du coussin de pression (11) par une pièce annulaire (20) fixée frontalement et de manière amovible sur le piston, ladite pièce annulaire étant en saillie par rapport à la paroi frontale du vérin (13) du coussin de pression et étant guidé (22, 22a) le long de celui-ci sans pouvoir tourner et en ce que la pièce annulaire (20) comporte en sa face frontale les commutateurs (25, 26 et 27, 28).

5. Unité de fermeture selon une quelconque des revendications 1 à 4, caractérisée en ce qu'on a disposé l'un derrière l'autre sur la face frontale du piston annulaire (13) du coussin de pression (11) deux corps annulaires (20a et 20b) comme pièces à profil à cales multiples ou étoilé (17) qui présentent d'une part un profil interne (19a et 19b) correspondant et entre lesquels d'autre part, sur une partie longitudinale dépassant légèrement l'épaisseur de la tête (16), le profil interne est dégagé ou contre-dépouillé (19c).

6. Unité de fermeture selon une quelconque des revendications 1 à 5, caractérisée en ce que le moteur de réglage (23) est un moteur hydraulique qui est placé dans la plaque intermédiaire (5) et la douille taraudée (31) du système à arbre fileté (30) et qui s'agrippe coaxialement et de manière à pouvoir être déplacé à la tige filetée (32) à l'aide d'un pousse-toc, par exemple une broche carrée (33).

7. Unité de fermeture selon une quelconque des revendications 1 à 6, caractérisée en ce que le coussin de pression (11) est à action simple via le piston annulaire (13) placé dans le vérin (12) du coussin de pression et en ce que le vérin (12) du coussin de pression présente plusieurs, par exemple trois, vérins de recul ou poussoirs de piston (35) pour le piston annulaire (13).

8. Unité de fermeture selon une quelconque des revendications 1 à 7, caractérisée en ce que le coussin de pression (11) est à double action via le piston annulaire (13) placé dans le vérin (12) du coussin de pression.

9. Unité de fermeture selon une quelconque des revendications 1 à 8, caractérisée en ce que la plaque d'extrémité (2) présente, coaxialement par rapport au piston annulaire (13) du coussin de pression (11), un passage (29) à travers lequel le piston central (15) relié à la plaque intermédiaire ou le système à arbre fileté (30) formant ce piston peut être reculé lors du mouvement d'ouverture de l'outil de moulage (6).

10. Unité de fermeture selon une quelconque des revendications 1 et 3, caractérisée par un système de butée fixe (38) disposé sur le système à arbre fileté (30) et/ou le moteur de réglage (23), qui comprend une première limite du parcours de rotation (45/47) pour au moins une position de recouvrement débrayée et une deuxième limite du parcours de rotation (44/47) pour au moins une position décalée embrayée des deux pièces (16 et 17) à profil à cales multiples ou étoilé et qui présente en outre pour chaque position décalée embrayée un dispositif de verrouillage (46/47) supplémentaire (fig. 7 à 10).

11. Unité de fermeture selon la revendication 10, caractérisée en ce que le système de butée fixe (38) comprend un certain nombre d'éléments de limitation du parcours de rotation (43a, 43b, 43c, 43d) et d'éléments de verrouillage (46) correspondant au nombre de bras des pièces (16 et 17) à profil à cales multiples ou étoilé (fig. 8 et 10).

12. Unité de fermeture selon une quelconque des revendications 10 et 11, caractérisée en ce que le système de butée fixe (38) est relié à une pièce de positionnement (41) qui peut être placée dans une position de limitation du parcours de rotation (fig. 8) et dans une position de verrouillage (48) à partir d'une position débloquée.

13. Unité de fermeture selon une quelconque des revendications 10 à 12, caractérisée en ce que la position de verrouillage (46,47) de la pièce de positionnement (41) ne peut embrayée (48) que dans la position décalée accouplée des deux pièces (16 et 17) à profil à cales multiples ou étoilé.

14. Unité de fermeture selon une quelconque des revendications 10 à 13, caractérisée en ce que le système de butée fixe (38) présente un disque de blocage (40) claveté avec l'arbre (39) du moteur de réglage (23) comportant plusieurs éléments (43a à 43d) pour limiter le parcours de rotation répartis régulièrement sur la périphérie, en ce que chaque élément (43a à 43d) pour limiter le parcours de rotation présente deux surfaces de butée (44 et 45) pour une pièce de verrouillage ainsi que, à côté de la surface de butée (44) une découpe (46) comme élément de verrouillage pour le téton de verrouillage (47) et en ce que le téton de verrouillage (47) fait partie d'une pièce de réglage (41) pouvant être déplacée par un dispositif d'actionnement (48) via un capteur de parcours (49).
